# EUROPÄISCHE PATENTSCHRIFT

(11) **EP 0 645 546 B1**
(45) Veröffentlichungstag und Bekanntmachung des Hinweises auf die Patenterteilung: **05.03.1997**
(21) Anmeldenummer: 94810487.2
(22) Anmeldetag: 25.08.1994
(51) Int. Cl.: F16B 19/14, F16B 43/00, B25C 3/00, B25C 1/18

(54) **Befestigungselement**
Fastening device
Dispositif de fixation

(30) Priorität: 23.09.1993 DE 4332355
(43) Veröffentlichungstag der Anmeldung: 29.03.1995
(73) Patentinhaber: HILTI Aktiengesellschaft, 9494 Schaan (LI)
(72) Erfinder: Janssen, Rupert, A-6812 Meiningen (AT); Groeschel, Friedrich, Dr., CH-9470 Buchs (CH)
(74) Vertreter: Wildi, Roland

(56) Entgegenhaltungen:
- EP-A- 0 135 427
- FR-A- 2 260 018
- US-A- 2 954 717
- US-A- 3 407 982

## Beschreibung

Die Erfindung betrifft ein metallisches Führungselement für Befestigungselemente, das mittels pulverkraftbetriebenem Setzgerät in harte Aufnahmewerkstoffe eintreibbar ist, mit einer Durchtrittsöffnung, die mindestens drei konvex ausgebildete, in die Durchtrittsöffnung senkrecht zu deren Hauptachse ragende, plastisch verformbare Führungsbereiche für die Führung des Befestigungselementes aufweist.

Befestigungselemente, die mit Hilfe pulverkraftbetriebenem Setzgeräte in harte Aufnahmewerkstoffe eintreibbar sind, dienen der Befestigung von Bauteilen an der Oberfläche vorwiegend harter Aufnahmewerkstoffe. Insbesondere bei der Befestigung von Blechen oder Holzleisten werden Befestigungselemente verwendet, die ein erstes, flanschartiges und ein zweites, sich verjüngendes Ende aufweisen. Auf dem verjüngten Ende sitzt ein Führungselement, das während eines Setzvorganges unter Aufweitung einer Durchtrittsöffnung entlang des Schaftes zum flanschartigen Ende verschoben wird. Die Aussenabmessung des Führungselementes ist grösser als der Aussendurchmesser des Flansches, so dass vom befestigten Bauteil ausgehende Zugkräfte über eine grosse Fläche auf das Befestigungselement übertragbar sind.

Beispielsweise ist ein Befestigungselement mit einem auf dem verjüngten Ende des Befestigungselementes sitzenden Führungselement in Form einer Scheibe bekannt, deren zentrale Durchtrittsöffnung eine quadratische Form aufweist. Die grösste diagonale Weite dieser Durchtrittsöffnung entspricht im wesentlichen dem Schaftdurchmesser des Befestigungselementes.

Während des Setzvorganges wird die Scheibe aus dem verjüngten Bereich des Befestigungselementes zum flanschartigen Ende verschoben. Dabei wird die zentrale Durchtrittsöffnung, insbesondere die Seite der Durchtrittsöffnung vom Schaft des Befestigungselementes, aufgeweitet, so dass die Kontaktfläche zwischen dem Schaft des Befestigungselementes und der Innenwandung der Durchtrittsöffnung erheblich zunimmt. Daraus resultiert der Nachteil, dass die zum Aufweiten der Durchtrittsöffnung notwendige Kraft sehr schnell auf eine grosse Kontaktfläche verteilt wird, so dass die weitere Aufweitung der Durchtrittsöffnung praktisch unmöglich wird. Ein weiterer Nachteil besteht darin, dass mit zunehmender Kontaktfläche eine erhöhte Reibung entsteht, die dem Setzvorgang des Befestigungselementes entgegenwirkt.

Aus der US-A-2 954 717 ist ein metallisches Führungselement mit einer zentralen Durchtrittsöffnung für ein Befestigungselement bekannt. Die Durchtrittsöffnung weist Führungsbereiche für die Führung des Befestigungselementes auf. Die Führungsbereiche ragen senkrecht zu deren Hauptachse in die Durchtrittsöffnung.

Der Erfindung liegt die Aufgabe zugrunde, ein Führungselement eines Befestigungselementes derart auszubilden, dass einerseits eine aureichende Führung gewährleistet ist und dass andererseits der Führungsbereich beim Setzvorgang leicht verformbar ist.

Erfindungsgemäss wird dies dadurch erreicht, dass die Führungsbereiche entlang ihrer parallel zur Hauptachse verlaufenden Erstreckung ballig ausgebildet sind.

Um eine zusätzliche, leichtere radiale Verformung der Führungsbereiche zu Beginn des Setzvorganges erreichen zu können, sind die Führungsbereiche ballig ausgebildet. Der Kontaktbereich zwischen den Führungsbereichen und dem Schaft des Befestigungselementes sind auf diese Weise punktförmig ausgebildet. Speziell das Ansetzen der Scheibe auf dem sich verjüngenden Bereich des Befestigungselementes wird dadurch erleichtert.

Aufgrund der konvexen Ausbildung der Führungsbereiche erfolgt bei deren im wesentlichen radialen Verformung eine sehr langsame Zunahme des Kontaktbereiches zwischen dem Schaft des Befestigungselementes und dem Führungselement. Dadurch wird die Kraft für die Verformungsarbeit auf einen kleinen Bereich konzentriert, so dass die radiale Verformung dieser konvexen Führungsbereiche ohne grossen Widerstand erfolgt. Aufgrund der kleinen Kontaktfläche zwischen dem Führungsbereich und dem Schaft des Befestigungselementes entsteht sehr wenig Reibung, so dass der Setzvorgang ohne Behinderung erfolgt.

Die Führungsbereiche des Führungselementes sind derart angeordnet, dass auf jeden Fall die zentrische Lage des Befestigungelementes in dem Führungselement gewährleistet ist. Bei sehr langen Führungselementen können einzelne Führungsbereiche in unterschiedlichen Höhen und in Umfangsrichtung zueinander versetzt angeordnet sein.

Speziell bei dünnen bzw. kurz ausgebildeten Führungselementen ist es von Vorteil, wenn die Führungsbereiche auf derselben, senkrecht zur Hauptachse der Durchtrittsöffnung verlaufenden Ebene angeordnet sind. Auf diese Weise wird eine schräge Lage des Führungselementes gegenüber dem Befestigungselement verhindert.

Zweckmässigerweise beträgt das Verhältnis der kleinsten radialen Erstreckung zwischen dem Zentrum der Durchtrittsöffnung und dem Führungsbereich zur grössten radialen Erstreckung zwischen dem Zentrum der Durchtrittsöffnung und jenem Teil der Durchtrittsöffnung, welcher vom Zentrum der Durchtrittsöffnung am weitesten entfernt liegt, 1:1,1 bis 1: 1,8. Führungselemente, deren Führungsbereich in einem derartigen Verhältnis zur Durchtrittsöffnung ausgebildet sind, gewährleisten einen guten Sitz auf dem verjüngten Ende des Befestigungselementes und ein ausreichendes Aufweiten der Durchtrittsöffnung während des Setzvorganges des Befestigungselementes.

Auch im Bereich der Elektroverlegung werden Befestigungselemente in Verbindung mit Halteelementen verwendet. Ein derartiges Halteelement wird einerseits vom Befestigungselement gegen die Oberfläche eines Aufnahmemateriales gehalten, andererseits dient das Halteelement der Festlegung von Bauteilen, insbesondere von Elektrorohren. Das Führungselement ist daher vorzugsweise einstückig mit einem Halteelement verbunden.

Die Erfindung wird anhand von Zeichnungen, die zwei Ausführungsbeispiele wiedergeben, näher erläutert: Es zeigen:
- Fig. 1: ein erfindungsgemässes Führungselement in vergrösserter Darstellung;
- Fig. 2: das Führungselement in geschnittener Darstellung, entlang der Linie II-II in Fig. 1;
- Fig. 3: ein einstückig mit einem Führungselement verbundenes Halteelement in vergrösserter Darstellung.

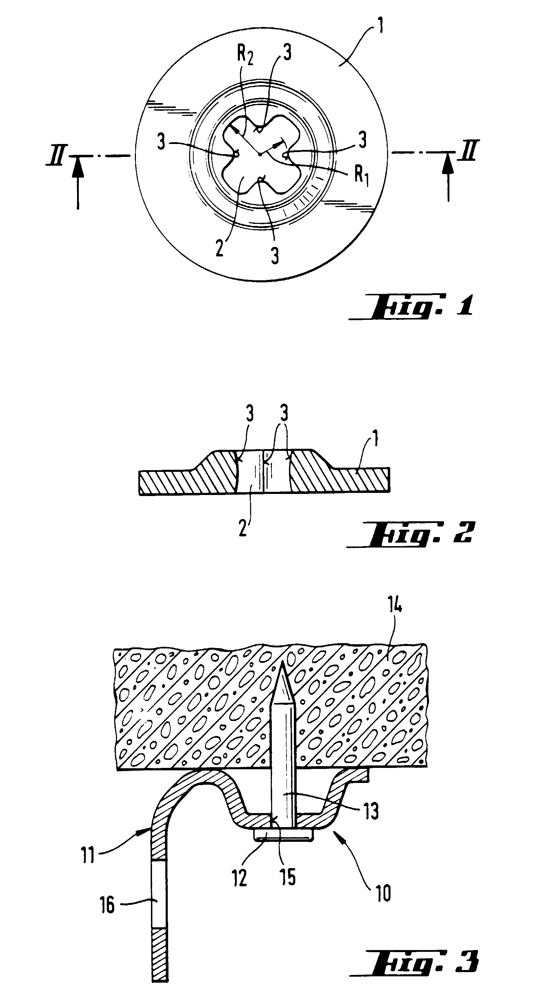

Das in den Fig. 1 und 2 dargestellte Führungselement 1 besitzt eine kreisrunde Aussenkontur und eine zentrale Durchtrittsöffnung 2. In die Durchtrittsöffnung 2 ragen beispielsweise vier konvex ausgebildete, plastisch verformbare Führungsbereiche 3. Diese sind in einer Ebene angeordnet, die senkrecht zur Hauptachse der Durchtrittsöffnung 2 verläuft. Aufgrund der in die Durchtrittsöffnung 2 ragenden Führungsbereiche 3 besitzt die Durchtrittsöffnung 2 unterschiedliche radiale Erstreckungen R1, R2. Die kleinste radiale Erstreckung R1 ist jene Erstreckung zwischen dem Zentrum der Durchtrittsöffnung 2 und dem Führungsbereich 3. Die grösste radiale Erstreckung R2 liegt zwischen dem Zentrum der Durchtrittsöffnung 2 und jenem Teil der Durchtrittsöffnung 2, welches vom Zentrum der Durchtrittsöffnung 2 am weitesten entfernt ist. Das Verhältnis der kleinsten radialen Erstreckung R1 zur grössten radialen Erstreckung R2 beträgt 1:1 bis 1:1,8.

Das in Fig. 3 dargestellte Führungselement 10 ist einstückig mit einem Halteelement 11 verbunden und mittels eines Befestigungselementes 12 fest an der Oberfläche eines Aufnahmewerkstoffes 14 angeordnet. Das Führungselement 10 besitzt eine Durchtrittsöffnung 15, durch die das Befestigungselement 12 ragt. Die Durchtrittsöffnung 15 besitzt wenigstens drei konvex ausgebildete, in die Durchtrittsöffnung 15 ragende, plastisch verformbare Führungsbereiche, die nicht dargestellt sind. Die kleinste radiale Erstreckung der Durchtrittsöffnung 15 ist dabei kleiner ausgebildet als der Aussendurchmesser des Schaftes 13 des Befestigungselementes 12. Die grösste radiale Erstreckung der Durchtrittsöffnung 15 ist wenigstens gleich gross ausgebildet wie der Aussendurchmesser des Schaftes 13 des Befestigungselementes 12. Das dargestellte Führungselement 10 ist einstückig mit dem Halteelement 11 verbunden und streifenförmig ausgebildet. Das Halteelement 11 besitzt einen Durchtritt 16, der der Aufnahme von Bauteilen dient. So ist beispielsweise an dem Halteelement 11 eine nicht dargestellte Rohrschelle anbringbar, mit deren Hilfe Rohrleitungen, insbesondere Elektrorohre, festlegbar sind.

Der Aufnahmewerkstoff 14, in den das Befestigungselement 12 mittels eines nicht dargestellten pulverkraftbetriebenen Setzgerätes eingetrieben wurde, ist im vorliegenden Beispiel Beton.

## Patentansprüche

1. Metallisches Führungselement (1, 10) für ein Befestigungselement (12), das mittels pulverkraftbetriebenem Setzgerät in harte Aufnahmewerkstoffe (14) eintreibbar ist, mit einer Durchtrittsöffnung (2, 15), die mindestens drei konvex ausgebildete, in die Durchtrittsöffnung (2, 15) senkrecht zu deren Hauptachse ragende, plastisch verformbare Führungsbereiche (3) für die Führung des Befestigungselementes (12) aufweist, **dadurch gekennzeichnet,** dass die Führungsbereiche (3) entlang ihrer parallel zur Hauptachse verlaufenden Erstreckung ballig ausgebildet sind.

2. Führungselement nach Anspruch 1, dadurch gekennzeichnet, dass die Führungsbereiche (3) auf derselben, senkrecht zur Hauptachse der Durchtrittsöffnung (2, 15) verlaufenden Ebene angeordnet sind.

3. Führungselement nach Anspruch 1 oder 2, dadurch gekennzeichnet, dass das Verhältnis der kleinsten radialen Erstreckung (R1) zwischen dem Zentrum der Durchtrittsöffnung (2) und dem Führungsbereich (3) zur grössten radialen Erstreckung (R2) zwischen dem Zentrum der Durchtrittsöffnung (2) und jenem Teil der Durchtrittsöffnung, welcher vom Zentrum der Durchtrittsöffnung (2) am weitesten entfernt liegt, 1:1,1 bis 1:1,8 beträgt.

4. Führungselement nach einem der Ansprüche 1 bis 3, dadurch gekennzeichnet, dass das Führungselement (10) einstückig mit einem Halteelement (11) verbunden ist.

## Claims

1. Metallic guide element (1, 10) for a fastening element (12) which is driven by means of an explosively actuated setting tool into hard receiving materials (14), with a passage opening (2, 15) comprising at least three plastically deformable guide areas (3), which are convex and extend into the passage (2, 15) perpendicularly to its main axis, for the purpose of guiding the fastening element (12), **characterised in that** the guide areas (3) are bulged along their extent parallel to the main axis.

2. Guide element according to Claim 1, **characterised in that** the guide areas (3) are arranged on the same plane which extends perpendicularly to the main axis of the passage opening (2, 15).

3. Guide element according to Claim 1 or 2, **characterised in that** the ratio of the smallest radial extent (R1) between the centre of the passage opening (2) and the guide area (3) to the largest radial extent (R2) between the centre of the passage opening (2) and the portion of the passage opening which is the farthest away from the centre of the passage opening (2) lies between 1:1.1 and 1:1.8.

4. Guide element according to one of Claims 1 to 3, **characterised in that** the guide element (10) is integrated with the support element.

## Revendications

1. Elément de guidage métallique (1, 10) pour un élément de fixation (12) qui peut être enfoncé au moyen d'un outil de scellement actionné par l'énergie de la poudre dans des matériaux de réception (14) durs, comprenant une ouverture de passage (2, 15) qui présente au moins trois sections de guidage (3) à déformation plastique, de forme convexe, qui dépassent dans l'ouverture de passage (2, 15) perpendiculairement à l'axe principal de celle-ci, et servant au guidage de l'élément de fixation (12), **caractérisé en ce** que les sections de guidage (3) sont bombées le long de leur extension orientée parallèlement à l'axe principal.

2. Elément de guidage selon la revendication 1, caractérisé en ce que les sections de guidage (3) sont disposées dans le même plan orienté perpendiculairement à l'axe principal de l'ouverture de passage (2, 15).

3. Elément de guidage selon la revendication 1 ou 2, caractérisé en ce que le rapport entre la plus petite extension radiale (R1) entre le centre de l'ouverture de passage (2) et la section de guidage (3), et la plus grande extension radiale (R2) entre le centre de l'ouverture de passage (2) et la partie de l'ouverture de passage la plus éloignée du centre de l'ouverture de passage (2) est de 1 : 1,1 à 1 : 1,8.

4. Elément de guidage selon l'une des revendications 1 à 3, caractérisé en ce que l'élément de guidage (10) est relié d'un seul tenant avec un élément de retenue (11).
